# EUROPÄISCHE PATENTSCHRIFT

(11) **EP 2 293 404 B1**
(45) Veröffentlichungstag und Bekanntmachung des Hinweises auf die Patenterteilung: **06.03.2019**
(21) Anmeldenummer: 10171862.5
(22) Anmeldetag: 04.08.2010
(51) Int. Cl.: H02J 1/10

(54) **VORRICHTUNG ZUR ENERGIEVERSORGUNG EINER ELEKTRISCHEN KOMPONENTE**
DEVICE FOR SUPPLYING ENERGY TO AN ELECTRONIC COMPONENT
DISPOSITIF D'ALIMENTATION EN ÉNERGIE D'UN COMPOSANT ÉLECTRIQUE

(30) Priorität: 08.09.2009 DE 102009029255
(43) Veröffentlichungstag der Anmeldung: 09.03.2011
(73) Patentinhaber: Robert Bosch GmbH, 70442 Stuttgart (DE)
(72) Erfinder: Schaefert, Arthur, 77830 Bühlertal (DE); Blaumeiser, Boris, 8048 Zürich (CH); Schneider, Thomas, 97631 Bad Königshofen (DE)

(56) Entgegenhaltungen:
- EP-A1- 1 967 407
- WO-A2-2005/006515
- US-A1- 2006 192 433
- US-A1- 2007 273 209
- US-A1- 2009 026 841

## Beschreibung

Die Erfindung betrifft eine Vorrichtung zur Energieversorgung einer elektrischen Komponente an einem Zweipol, wobei die Vorrichtung wenigstens eine erste Energieeinheit, die als Brennstoffzellenstapel ausgeführt ist, und wenigstens eine zweite Energieeinheit aufweist, gemäß dem Oberbegriff von Anspruch 1.

### Stand der Technik

Aus der Druckschrift DE 102 23 117 A1 ist bekannt, dass Vorrichtungen zur Energieversorgung einer elektrischen Komponente aus mehreren Teilkomponenten aufgebaut sind. Für die Energieversorgung einer elektrischen Komponente, z.B. eines elektrischen Fahrantriebs und Verbraucher eines Brennstoffzellenfahrzeuges, werden vorzugsweise hybride Energieversorgungssysteme bestehend aus einem Brennstoffzellenstapel und einem Energiespeicher, wie Akku oder Kondensator, verwendet. Dabei wird der Energiespeicher parallel zu dem Brennstoffzellenstapel über einen DC/DC-Wandler geschaltet. Allerdings zeigt diese Beschaltung von Brennstoffzellenstapeln parallel zu einem Energiespeicher, dass je nach benötigter Energie der elektrischen Komponente die Ausgangsspannung stark variiert. Daher müssen alle Verbrauchersysteme auf einen großen Betriebsspannungsbereich ausgelegt werden. Die EP 1 967 407 A1 und die US 2007 / 273 209 A1 zeigen Energieversorgungen für elektrische Komponenten, bei welchen zwei unterschiedliche Energiequellen kombiniert werden, um eine nahezu konstante Ausgangsspannung zu erzielen.

### Offenbarung der Erfindung

Es ist Aufgabe der folgenden Erfindung, eine verbesserte Vorrichtung zur Energieversorgung einer elektrischen Komponente zu schaffen.

Zur Lösung dieser Aufgabe wird eine Vorrichtung gemäß den Merkmalen des Anspruchs 1 vorgeschlagen. In den abhängigen Ansprüchen sind bevorzugte Weiterbildungen ausgeführt. Dabei können die in den Ansprüchen und in der Beschreibung erwähnten Merkmale jeweils für sich oder in Kombination erfindungswesentlich sein.

Erfindungsgemäß ist vorgesehen, dass die zweite Energieeinheit an einem Energiesteuerelement gekoppelt ist, mit dem eine Spannungsanpassung zur Erreichung einer nahezu konstanten Spannungsversorgung für die elektrische Komponente erzielbar ist.

Besonders vorteilhaft ist, dass der Zweipol eine Umschaltvorrichtung aufweist, wodurch der Brennstoffzellenstapel in Reihe mit der zweiten Energieeinheit schaltbar ist, wobei die Spannung an dem Zweipol durch das Energiesteuerelement einstellbar ist. Damit kann die Spannung der Vorrichtung zur Energieversorgung unabhängig vom entnommenen Strom eingestellt werden. Es ist bekannt, dass die Polarisationskennlinie eines Brennstoffzellenstapels bei einer hohen Stromentnahme sinkt. Daher ist es z.B. in einem hybriden Energieversorgungssystem, mit einem Brennstoffzellenstapel und einer Energieeinheit möglich, die Spannung des hybriden Energieversorgungssystems unabhängig vom Strom des Brennstoffzellenstapels einzustellen. Generell kann einem Spannungsabfall einzelner Energieeinheiten ebenfalls durch eine Reihenschaltung dieser Energieeinheiten entgegengewirkt werden, die durch das Energiesteuerelement gesteuert werden.

Weiterhin ist vorteilhaft, dass die zweite Energieeinheit ein Energiespeicher, insbesondere ein Rotationsspeicher oder ein Akku oder ein Kondensator, insbesondere ein Doppelschichtkondensator ist. Durch die hohe Energiedichte, die diese Energiespeicher haben, können auch elektrische Komponente betrieben werden, die hohe Leistungsanforderungen besitzen. Zudem können kurzzeitig angeforderte Leistungsspitzen der elektrischen Komponente abgedeckt werden. Da es sich bei der elektrischen Komponente um einen elektrischen Motor und/oder einem Generator oder eine kombinierte Generator/Motor-Einheit handeln kann, kann die vom Generator erzeugte Energie wieder den Energiespeichern zugefügt werden.

Besonders vorteilhaft ist, dass der Brennstoffzellenstapel durch die Umschaltvorrichtung parallel zu dem Energiesteuerelement schaltbar ist, wodurch eine Ladung des Energiespeichers erzielbar ist. Dadurch kann der Energiespeicher durch den Brennstoffzellenstapel geladen werden. Auch ist es möglich, den Energiespeicher durch zusätzliche Energieeinspeisung an dem Zweipol zu laden. Da der Brennstoffzellenstapel und der Energiespeicher somit wahlweise in Reihen- oder Parallelschaltung zueinander geschaltet werden können, muss der Energiespeicher nicht aus seinem Schaltungsverband zum Laden herausgelöst werden. Somit kann bei jedem Energieüberschuss am Zweipol und nicht benötigtem Energiespeicher der Energieüberschuss zur Ladung des Energiespeichers gebraucht werden. Im Fall, dass die elektrische Komponente eine kombinierten Generator/Motor-Einheit ist, und die kombinierte Generator/ MotorEinheit in einem Kraftfahrzeug eingesetzt ist, kann die gewonnene Energie, die freigesetzt wird, wenn das Kraftfahrzeug die kombinierte Motor/ Generator-Einheit antreibt, die dadurch erzeugte Energie zur Ladung des Energiespeichers genutzt werden.

Weiterhin hat es sich als vorteilhaft erwiesen, dass das Energiesteuerelement ein DC/DC-Wandler ist. Durch den Einsatz eines DC/DC-Wandlers in Verbindung mit einem Energiespeicher ist es möglich, den Spannungseinbruch bei Stromanstieg durch Energie aus dem Energiespeicher auszugleichen. Der DC/DC-Wandler ermöglicht eine Spannungsaddition des Brennstoffzellenstapels mit dem Energiespeicher. Zudem ermöglicht der DC/DC-Wandler, bei einer parallelen Verschaltung von Energiespeicher mit dem Brennstoffzellenstapel, die unterschiedlichen dabei auftretenden Spannungsniveaus aneinander anzugleichen.

Besonders vorteilhaft ist, dass die Umschaltvorrichtung einen mechanischen Schalter und einen mechanischen Wechselschalter aufweist. Durch diese Bauelemente kann ein bidirektionaler Energiefluss gewährleistet werden. Zudem ist eine Ansteuerung des Schalters und des Wechselschalters durch die Benutzung von Relais möglich. Damit kann ein ferngesteuerter Aufbau der Umschaltvorrichtung durch mechanisch betätigbare Bauelemente durchgeführt werden. Durch die Benutzung von Relais kann gewährleistet werden, dass der Steuerstromkreis von dem Laststromkreis galvanisch getrennt ist.

Zudem ist vorteilhaft, dass die Umschaltvorrichtung ein erstes Halbleiterbauelement und ein zweites Halbleiterbauelement, das die Funktion eines Wechselschalters erfüllt, aufweist. Die Benutzung von Halbleiterbauelementen kann den Anforderungen von schnellen Schaltzyklen genügen. Zudem sind für den Einsatz von Halbleiterbauelementen Thyristoren und/oder IGBTs denkbar, mit denen kleine, mittlere oder hohe Leistungen schaltbar sind. IGBTs bieten den Vorteil einer nahezu leistungsfreien Ansteuerung, verfügen über eine hohe Vorwärtssperrspannung von ungefähr 6 kV und können Ströme bis zu 3 kA schalten. Thyristoren können dabei Ströme bis zu 6 kA und Spannungen bis zu 8 kV schalten und bieten den Vorteil eines hohen Sperrwiderstandes. Beide Halbleiterbauelemente, Thyristoren und IGBTs, bieten zudem den Vorteil eines geringen Raumbedarfs, kleine Durchlasswiderstände, absolute Wartungsfreiheit und den Vorteil, dass keine Funkenbildung entsteht. Das Zünden und/oder Löschen der Thyristoren und/oder die Ansteuerung der IGBTs kann dabei mit einem Computer über ein Interface ermöglicht werden. Zudem kann das Interface eine TCP/IP-Schicht (4. und 3. Schicht des OSI-Schichtenmodells) aufweisen, so dass das Interface über Protokolle, die auf TCP/IP basieren, zum Zünden und/oder Löschen der Thyristoren und/oder Ansteuern der IGBTs angesprochen werden kann. Auch die Einbindung des Interfaces in einem Bussystem wie z.B. LIN, CAN oder FlexRay ist denkbar.

Zudem ist vorteilhaft, dass die Umschaltvorrichtung ein drittes Halbleiterbauelement aufweist, das zwei parallel geschaltete Halbleiterschaltelemente aufweist, wobei insbesondere ein bidirektionaler Energiefluss durch das dritte Halbleiterbauelement erzielbar ist. Dadurch kann auch bei Ausfall des Brennstoffzellenstapels die elektrische Komponente durch die zweite Energieeinheit direkt angetrieben werden. Die Halbleiterschaltelemente können dabei aus Thyristoren bestehen, mit denen hohe Leistungen schaltbar sind.

Weiterhin hat es sich als vorteilhaft erwiesen, dass die zweite Energieeinheit ein Brennstoffzellenstapel ist. Dabei kann der zusätzliche Aufwand der Umschaltvorrichtung vermieden werden, da kein Energiespeicher während des Betriebes zu laden ist. Es können für die erste und zweite Energieeinheit Brennstoffzellenstapel zum Einsatz kommen, deren Zellanzahl unterschiedlich ist. Zudem kann die Gesamtleistung der Vorrichtung durch Nutzung eines Brennstoffzellenstapels als zweite Energieeinheit erhöht werden.

Zudem ist vorteilhaft, dass parallel zu dem Zweipol wenigstens ein zweiter DC/DC-Wandler, der mit einem zweiten Energiespeicher gekoppelt ist, geschaltet ist. Dadurch können Leistungsspitzen, die von der elektrischen Komponente benötigt werden, über den zweiten Energiespeicher der elektrischen Komponente zugeführt werden. Zudem kann dadurch ebenfalls eine nahezu konstante Spannungsversorgung für die elektrische Komponente erzielt werden. Da der zweite Energiespeicher parallel zum Zweipol angeordnet ist, kann dieser während des Betriebes geladen werden. Auch ist es vorstellbar, mehrere Energiespeicher parallel über einen DC/DC-Wandler mit dem Zweipol zu koppeln. Dadurch kann die Ausfallsicherheit des Gesamtsystems wesentlich erhöht werden. Zudem ist es möglich, Energiespeicher mit verschiedenen Kapazitäten anzubringen.

Besonders vorteilhaft ist, dass in Reihe zu dem Brennstoffstapel als erste Energieeinheit das Energiesteuerelement geschaltet ist, wobei parallel dazu ein Brennstoffzellenstapel als zweiter Energieeinheit angeordnet ist. Bei einem erhöhten Energiebedarf der elektrischen Komponente kann die zweite Energieeinheit parallel dazu geschaltet werden, um den gesamten Leistungsbedarf zu decken. Ebenfalls ist es vorstellbar mehrere Brennstoffzellenstapel parallel zu schalten. Auch kann die Zellanzahl der parallel geschalteten Brennstoffzellenstapel variieren, so dass der Hauptleistungsbedarf von dem Brennstoffzellenstapel mit der höchsten Zellanzahl gedeckt wird, wobei die anderen parallel geschalteten Brennstoffzellenstapel mit der geringeren Zellanzahl nur in dem Fall eines erhöhten Leistungsbedarf zugeschaltet werden.

Weiterhin ist es vorteilhaft, dass das Energiesteuerelement eine Diode ist. Damit kann die Polarisationskennlinie eines einzelnen Brennstoffzellenstapels geglättet werden. Dabei ist eine Parallelschaltung von zwei Brennstoffzellenstapeln mit unterschiedlicher Zellanzahl möglich. Bei Inbetriebnahme der Vorrichtung zur Energieversorgung kann zunächst der Leistungsbedarf vom ersten Brennstoffzellenstapel mit der höchsten Zellanzahl bezogen werden. Der zweite Brennstoffzellenstapel mit der kleineren Zellanzahl kann dabei außer Betrieb bleiben. Bei einem erhöhten Leistungsbedarf der elektrischen Komponente kann der zweite Brennstoffzellenstapel in Betrieb genommen werden. Sinkt durch die erhöhte Stromabnahme des ersten Brennstoffzellenstapels die Ausgangsspannung und fällt diese Spannung unter einer Spannung des zweiten Brennstoffzellenstapels, beginnt die Diode zu leiten. Dadurch wird der Leistungsbedarf von beiden Brennstoffzellenstapeln abgedeckt und der Spannungsabfall ist geringer als bei Betrieb eines einzelnen Brennstoffzellenstapels.

Weitere Maßnahmen und Vorteile der Erfindung ergeben sich aus den Ansprüchen, den nachfolgenden Beschreibungen und den Zeichnungen. In den Zeichnungen ist die Erfindung in mehreren Ausführungsbeispielen dargestellt. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Ansicht einer Vorrichtung zur Energieversorgung mit einer elektrischen Komponente,
- Figur 2: eine schematische Ansicht einer Vorrichtung zur Energieversorgung, wobei die zweite Energieeinheit ein Energiespeicher ist,
- Figur 3: eine schematische Ansicht der Vorrichtung zur Energieversorgung, wobei eine Umschaltvorrichtung an einem Zweipol der elektrischen Komponente gekoppelt ist,
- Figur 4: eine schematische Ansicht einer Vorrichtung zur Energieversorgung, wobei die Umschaltvorrichtung Halbleiterbauelemente aufweist,
- Figur 5: eine schematische Ansicht der Vorrichtung zur Energieversorgung, wobei die Umschaltvorrichtung Halbleiterbauelemente aufweist, die einen bidirektionalen Energiefluss gestatten,
- Figur 6: eine schematische Ansicht einer Vorrichtung zur Energieversorgung, wobei die erste und die zweite Energieeinheit ein Brennstoffzellenstapel ist,
- Figur 7: eine schematische Ansicht einer Vorrichtung zur Energieversorgung, wobei parallel zu über einen DC/DC-Wandler in Reihe geschalteter Brennstoffzellenstapel ein Energiespeicher angeordnet ist,
- Figur 8: eine weitere schematische Ansicht einer Vorrichtung zur Energieversorgung, wobei zwei Brennstoffzellenstapel parallel über eine Diode angeordnet sind und
- Figur 9: eine weitere schematische Ansicht einer Vorrichtung zur Energieversorgung, wobei zwei Brennstoffzellenstapel parallel über einen DC/DC-Wandler angeordnet sind.

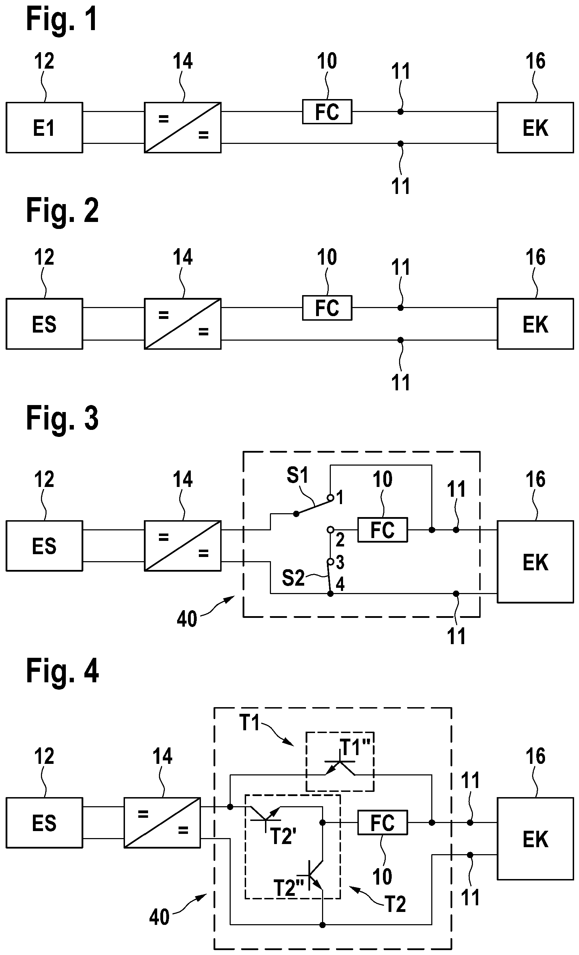

In Figur 1 ist schematisch eine Vorrichtung zur Energieversorgung einer elektrischen Komponente 16 dargestellt, bei der eine erste Energieeinheit 12 an einem DC/DC-Wandler 14 gekoppelt ist, der in Reihe mit einer zweiten Energieeinheit 10, die als Brennstoffzellenstapel 10 ausgeführt ist, geschaltet, so dass an einem Zweipol 11 elektrische Energie entnommen werden kann. Der Zweipol 11 weist dabei eine elektrische Komponente 16 auf. Damit können die Spannungen, die die beiden Energieeinheiten 10, 12 erzeugen, aufaddiert werden, die zur Erzeugung einer nahezu konstanten Spannung an dem Zweipol 11 benötigt werden. Der eingebrachte DC/DC-Wandler 14 kann derart angesteuert werden, dass die resultierende Ausgangsspannung am Zweipol 11 konstant bleibt. Dadurch kann unabhängig vom entnommenen Strom des Brennstoffzellenstapels 10 eine nahezu konstante bzw. gezielt einstellbare Spannung eingestellt werden. Eine kostengünstige Auslegung aller Verbraucher an dem Zweipol 11 wird dadurch ermöglicht, da diese nicht für eine große variierende Eingangsspannung ausgelegt sein müssen.

In Figur 2 ist schematisch eine Vorrichtung zur Energieversorgung dargestellt, bei der die zweite Energieeinheit 12 ein Energiespeicher ist. Ein Energiespeicher 12 ist dabei an einem DC/DC-Wandler 14 gekoppelt, der wiederum in Reihe mit einem Brennstoffzellenstapel 10 geschaltet ist. Eine elektrische Komponente 16 ist dabei an dem Zweipol 11 gekoppelt. Das hier dargestellte hybride Energieversorgungssystem bietet den Vorteil, die Spannung an dem Zweipol 11 dieses hybriden Energieversorgungssystems unabhängig vom entnommenen Strom für die elektrische Komponente 16 einstellen zu können. Es ist bekannt, dass die Polarisationskennlinie des Brennstoffzellenstapels 10 mit zunehmender Entnahme von Strom durch die elektrische Komponente 16 fällt. Durch den Einsatz des DC/DC-Wandlers 14 und des Energiespeichers 12 ist es möglich, den Spannungseinbruch bei Stromanstieg durch Energie aus dem Energiespeicher 12 auszugleichen. Es ist auch möglich, die Spannung an dem Zweipol 11 unter der Spannung des Brennstoffzellenstapels 10 einzustellen. Dadurch kann je nach angefordertem Strom durch die elektrische Komponente 16 der Energiespeicher 12 geladen oder entladen werden. Dafür ist eine DC/DC-Wandlertopologie zu verwenden, an welcher man an ihrem Ausgang neben einer positiven Spannung auch eine negative Spannung einstellen kann.

In Figur 3 ist schematisch eine Vorrichtung zur Energieversorgung dargestellt, wobei eine Umschaltvorrichtung (40) an einem Zweipol 11 der elektrischen Komponente 16 angebracht ist. Ein Energiespeicher 12 ist an einem DC/DC-Wandler 14 gekoppelt, der an der Umschaltvorrichtung 40 geschaltet ist. Die Umschaltvorrichtung 40 weist dabei einen Wechselschalter S1 und einen Schalter S2 auf, die einen Brennstoffzellenstapel 10 parallel oder in Reihe zu dem DC/DC-Wandler 14 schalten können. Um den Energiespeicher 12 zu laden muss dazu der Schalter S1 auf Position 1 gestellt werden, sowie Schalter S2 geschlossen werden. Dadurch liegt der Brennstoffzellenstapel 10 parallel an dem DC/DC-Wandler 14 und parallel an dem Zweipol 11, an dem die elektrische Komponente 16 angeschlossen ist. Um den Brennstoffzellenstapel 10 in Reihe zu dem Energiespeicher 12 zu schalten ist es notwendig, den Schalter S1 auf Position 2 zu schalten und den Schalter S2 zu öffnen.

In Figur 4 ist schematisch eine Vorrichtung zur Energieversorgung dargestellt, wobei die Umschaltvorrichtung 40 Halbleiterbauelemente T1, T2 aufweist. Ein Energiespeicher 12 ist an einem DC/DC-Wandler 14 gekoppelt. Die Umschaltvorrichtung 40 kann dabei den Brennstoffzellenstapel 10 parallel oder in Reihe zu dem Energiespeicher 12 schalten. Dazu weist die Umschaltvorrichtung 40 zwei Halbleiterbauelemente T1 und T2 auf. Das Halbleiterbauelement T1 ist ein Halbleiterschalter, der es ermöglicht einen Energiefluss von dem Zweipol 11 zu einem DC/DC-Wandler zu steuern. Das Halbleiterbauelement T2 weist zwei Halbleiterschaltern T2', T2" auf, die von ihrer Funktion her einen Wechselschalter abbilden. Dadurch wird es ermöglicht den Brennstoffzellenstapel 10 in Reihe oder parallel zu dem DC/DC-Wandler 14 zu schalten. An dem elektrischen Zweipol 11 ist eine elektrische Komponente 16 angeordnet.

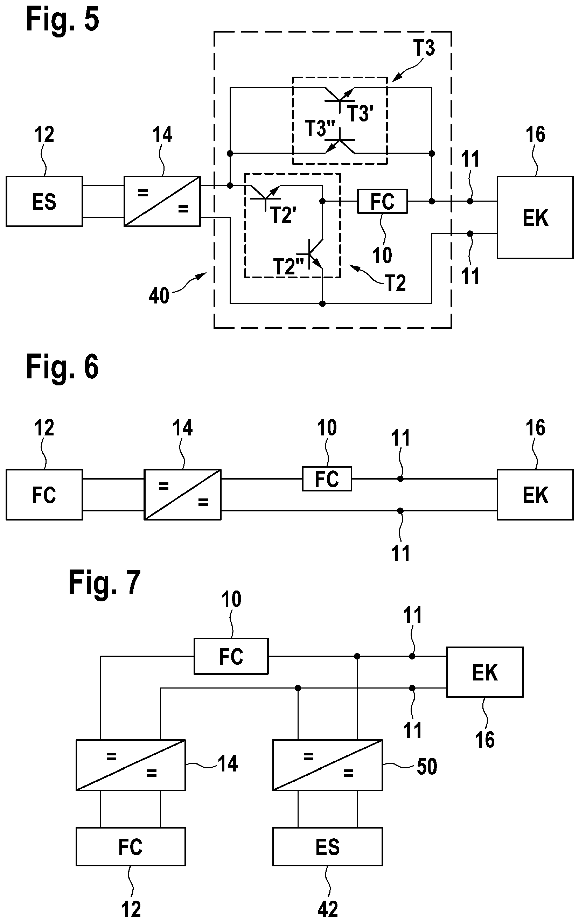

In Figur 5 ist schematisch eine Vorrichtung zur Energieversorgung dargestellt, wobei die Umschaltvorrichtung 40 ein Halbleiterbauelement T3 aufweist, die einen bidirektionalen Energiefluss gestattet. Ein Energiespeicher 12 ist an einem DC/DC-Wandler 14 angeordnet. An der Umschaltvorrichtung 40 sind dabei der DC/DC-Wandler 14 und die elektrische Komponente 16 gekoppelt. Die Umschaltvorrichtung 40 weist dabei ebenso wie in der Figur 4 zwei Halbleiterbauelemente T2' und T2" auf, die von ihrer Funktion her wie ein Wechselschalter aufgebaut sind. Zudem weist das dritte Halbleiterbauelement T3 zwei Halbleiterschalter T3' und T3" auf, die einen bidirektionalen Energiefluss gestatten. Damit kann der DC/DC-Wandler 14 parallel oder in Reihe mit der elektrischen Komponente 16 an dem Zweipol 11 geschaltet werden. Durch die Möglichkeit des bidirektionalen Energieflusses kann nicht nur der Energiespeicher 12 bei einer Parallelschaltung geladen werden, sondern der Energiespeicher 12 kann auch bei einem Ausfall der Brennstoffzelleneinheit 10 die elektrische Komponente 16 an dem Zweipol 11 mit Energie versorgen.

In Figur 6 ist schematisch eine Vorrichtung zur Energieversorgung dargestellt, wobei die erste 10 und die zweite Energieeinheit 12 ein Brennstoffzellenstapel ist. Ein Brennstoffzellenstapel 12 ist an einem DC/DC-Wandler 14 angeordnet. In Reihe zu dem DC/DC-Wandler 14 ist ein weiterer Brennstoffzellenstapel 10 angeschlossen, so dass die elektrische Komponente 16 an dem Zweipol 11 mit elektrischer Energie versorgt werden kann. Eine Umschaltvorrichtung ist nicht mehr nötig, da es keinen Energiespeicher gibt, der während des Betriebes zu laden ist. Allerdings werden auch hier die Vorteile einer konstanten Spannungsversorgung in dieser Ausführungsform erfüllt.

In Figur 7 ist schematisch eine Vorrichtung zur Energieversorgung dargestellt, wobei parallel zu in Reihe geschalteten Brennstoffzellenstapeln 10, 12 ein Energiespeicher 42 angeordnet ist. Ein Brennstoffzellenstapel 12 ist an einem DC/DC-Wandler 14 gekoppelt. In Reihe dazu ist ein weiterer Brennstoffzellenstapel 10 geschaltet. Der Zweipol 11 weist einen DC/DC-Wandler 50 auf, an dem ein Energiespeicher 42 parallel an dem Zweipol 11 geschaltet ist. Desweiteren ist an dem Zweipol 11 eine elektrische Komponente 16 angeschlossen. Dadurch wird es ermöglicht, dass überschüssige Energie die von der elektrischen Komponente 16 erzeugt wird, in dem Energiespeicher 42 gespeichert werden kann. Zudem ist eine erhöhte Ausfallsicherheit gegeben, da mehrere Komponenten parallel zu dem Zweipol 11 geschaltet sind. Zudem ist es denkbar, dass weitere Energiespeicher, die an einem DC/DC-Wandler 14 gekoppelt sind, parallel zu dem Zweipol 11 geschaltet werden.

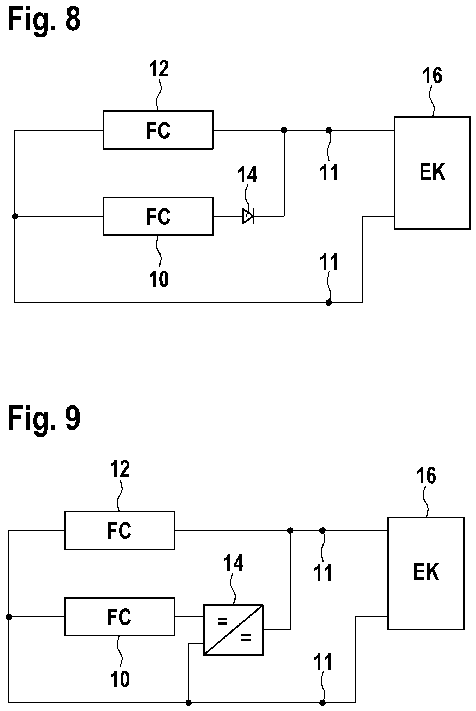

In Figur 8 ist schematisch eine Vorrichtung zur Energieversorgung dargestellt, wobei zwei Brennstoffzellenstapel 10 ,12 parallel über eine Diode 14 angeordnet sind. Zwei Brennstoffzellenstapel 10, 12 sind parallel über eine Diode 14 verschaltet. Die Zellanzahl des Brennstoffzellenstapels 12 ist größer als die Zellanzahl des Brennstoffzellenstapels 10. Bei der Inbetriebnahme der Vorrichtung zur Energieversorgung wird zunächst der Leistungsbedarf nur von dem Brennstoffzellenstapel 12 bezogen. Der Brennstoffzellenstapel 10 kann in diesem Fall außer Betrieb bleiben. Bei einem erhöhten Leistungsbedarf ist der Brennstoffzellenstapel 10 in Betrieb zu nehmen. Sinkt durch die erhöhte Stromabgabe vom Brennstoffzellenstapel 12 die Ausgangsspannung und fällt diese unter die Spannung vom Brennstoffzellenstapel 10, beginnt die Diode 14 zu leiten. Der Leistungsbedarf wird nun von beiden Brennstoffzellenstapeln 10, 12 abgedeckt und der Spannungsabfall ist geringer als bei Betrieb eines einzelnen Brennstoffzellenstapels. Durch diese Aufteilung der gesamten Brennstoffzellenstapelleistung in zwei kleinere Brennstoffzellenstapel 10, 12 ist es möglich bei einem kleinen Leistungsbedarf nur einen Brennstoffzellenstapel in Betrieb zu nehmen, und bei Bedarf einen zweiten Brennstoffzellenstapel zu aktivieren. Die Diode 14 hat zudem die Aufgabe einen negativen Strom in dem Brennstoffzellenstapel 10 bei Betrieb des Brennstoffzellenstapels 12 bzw. bei ungünstigen Spannungsverhältnissen zu verhindern. Sie dient dem Schutz des Brennstoffzellenstapels mit der geringeren Zellanzahl. Es ist auch möglich die zum Betrieb des Brennstoffzellenstapels nötigen Komponenten (z. B. Luftverdichter) jeweils in zwei Komponenten aufzuteilen. So können bei Betrieb des einen Stacks die Komponenten des anderen Stacks komplett abgeschaltet sein, verbrauchen somit in diesem Fall keine Energie und erhöhen damit den Wirkungsgrad des Gesamtsystems und Teillastbetrieb.

Die Diode 14 kann auch durch einen Leistungsschalter oder Leistungshalbleiter ersetzt werden. Es ist auch möglich mehr als zwei Brennstoffzellenstapel parallel zu schalten. D. h. parallel zum Brennstoffzellenstapel 12 werden neben dem Brennstoffzellenstapel 10 mit der Diode weitere Brennstoffzellenstapel (jeweils mit einer Diode versehen) parallel angeschlossen. Anstelle einer Diode können die beiden oder ggf. auch mehrere Brennstoffzellenstapel über je einen zusätzlichen DC/DC-Wandler parallel geschaltet werden, wie dies in Figur 9 ersichtlich wird. Damit lassen sich die Leistungsflüsse über eine Regelung gezielt beeinflussen.

## Patentansprüche

1. Vorrichtung zur Energieversorgung einer elektrischen Komponente (16) an einem Zweipol (11), wobei die Vorrichtung wenigstens eine erste Energieeinheit (10), die als Brennstoffzellenstapel (10) ausgeführt ist, und wenigstens eine zweite Energieeinheit (12) aufweist, wobei die zweite Energieeinheit (12) an einem Energiesteuerelement (14) gekoppelt ist, mit dem eine Spannungsanpassung zur Erreichung einer nahezu konstanten Spannungsversorgung für die elektrische Komponente (16) erzielbar ist, **dadurch gekennzeichnet, dass** der Zweipol (11) eine Umschaltvorrichtung (40) aufweist, wodurch der Brennstoffzellenstapel (10) in Reihe oder in parallel mit der zweiten Energieeinheit (12) schaltbar ist, wobei die Spannung an dem Zweipol (11) durch das Energiesteuerelement (14) einstellbar ist, dass das Energiesteuerelement (14) ein DC/DC-Wandler ist, dass die Umschaltvorrichtung (40) ein erstes Halbleiterbauelement (T2) mit zwei Halbleiterschaltelementen (T2', T2"), das die Funktion eines Wechselschalters erfüllt, aufweist, dass die Umschaltvorrichtung (40) ein zweites Halbleiterbauelement (T3) aufweist, das zwei parallel geschaltete Halbleiterschaltelemente (T3', T3") aufweist, und dass ein bidirektionaler Energiefluss durch das zweite Halbleiterbauelement (T3) erzielbar ist.

2. Vorrichtung nach Anspruch 1, **dadurch gekennzeichnet, dass** die zweite Energieeinheit (12) ein Energiespeicher (12), insbesondere ein Rotationsspeicher oder ein Akku oder ein Kondensator, insbesondere ein Doppelschichtkondensator ist.

3. Vorrichtung nach Anspruch 1 oder 2, **dadurch gekennzeichnet, dass** der Brennstoffzellenstapel (10) durch die Umschaltvorrichtung (40) parallel zu dem Energiesteuerelement (14) schaltbar ist, wodurch eine Ladung des Energiespeichers (12) erzielbar ist.

4. Vorrichtung nach einem der vorhergehenden Ansprüche, **dadurch gekennzeichnet, dass** die Energieeinheit (12) ein Brennstoffzellenstapel ist.

5. Vorrichtung nach einem der vorhergehenden Ansprüche, **dadurch gekennzeichnet, dass** parallel zu dem Zweipol (11) wenigstens ein zweiter DC/DC-Wandler (50), der mit einem zweiten Energiespeicher (42) gekoppelt ist, geschaltet ist.

6. Vorrichtung nach einem der vorhergehenden Ansprüche, **dadurch gekennzeichnet, dass** in Reihe zu dem Brennstoffzellenstapel (10) als erste Energieeinheit (10) das Energiesteuerelement (14) geschaltet ist, wobei parallel dazu ein Brennstoffzellenstapel (12) als zweite Energieeinheit (12) angeordnet ist.

## Claims

1. Apparatus for supplying energy to an electronic component (16) on a two-terminal network (11), wherein the apparatus has at least one first energy unit (10), which is embodied as a fuel cell stack (10), and at least one second energy unit (12), wherein the second energy unit (12) is coupled to an energy control element (14) with which voltage adjustment can be realized for the purpose of achieving a virtually constant voltage supply for the electrical component (16), **characterized in that** the two-terminal network (11) has a switchover apparatus (40) by way of which the fuel cell stack (10) can be connected in series or in parallel with the second energy unit (12), wherein the voltage at the two-terminal network (11) can be set by the energy control element (14), **in that** the energy control element (14) is a DC/DC converter, **in that** the switchover apparatus (40) has a first semiconductor component (T2) with two semiconductor switching elements (T2', T2"), which first semiconductor component fulfils the function of a toggle switch, **in that** the switchover apparatus (40) has a second semiconductor component (T3) which has two semiconductor switching elements (T3', T3") which are connected in parallel, and **in that** a bidirectional energy flow can be realized by way of the second semiconductor component (T3).

2. Apparatus according to Claim 1, **characterized in that** the second energy unit (12) is an energy store (12), in particular a rotational store or a rechargeable battery or a capacitor, in particular a double-layer capacitor.

3. Apparatus according to Claim 1 or 2, **characterized in that** the fuel cell stack (10) can be connected in parallel to the energy control element (14) by the switchover apparatus (40), as a result of which charging of the energy store (12) can be realized.

4. Apparatus according to one of the preceding claims, **characterized in that** the energy unit (12) is a fuel cell stack.

5. Apparatus according to one of the preceding claims, **characterized in that** at least one second DC/DC converter (50), which is coupled to a second energy store (42), is connected in parallel to the two-terminal network (11).

6. Apparatus according to one of the preceding claims, **characterized in that** the energy control element (14) is connected in series to the fuel cell stack (10) as first energy unit (10), wherein a fuel cell stack (12) is arranged parallel thereto as second energy unit (12).

## Revendications

1. Dispositif d'alimentation en énergie d'un composant électrique (16) au niveau d'un dipôle (11), le dispositif comprenant au moins une première unité d'énergie (10), conçue comme un empilement de piles à combustible (10), et au moins une deuxième unité d'énergie (12), la deuxième unité d'énergie (12) étant couplée à un élément de commande de puissance (14) permettant d'effectuer un ajustement de tension pour obtenir une alimentation en tension à peu près constante pour le composant électrique (16), **caractérisé en ce que** le dipôle (11) comprend un dispositif de commutation (40) permettant de commuter l'empilement de piles à combustible (10) en série ou en parallèle avec la deuxième unité d'énergie (12), la tension aux bornes du dipôle (11) étant réglée par l'élément de commande d'énergie (14), **en ce que** l'élément de commande de puissance (14) est un convertisseur continu-continu, **en ce que** le dispositif de commutation (40) comporte un premier composant à semi-conducteur (T2), comprenant deux éléments de commutation à semi-conducteur (T2', T2"), qui remplit la fonction d'un commutateur de sélection, **en ce que** le dispositif de commutation (40) comporte un deuxième composant à semi-conducteur (T3) qui comporte deux éléments de commutation à semi-conducteur (T3', T3") montés en parallèle, et **en ce qu'**un flux d'énergie bidirectionnel peut être obtenu par le deuxième composant à semi-conducteur (T3).

2. Dispositif selon la revendication 1, **caractérisé en ce que** la deuxième unité d'énergie (12) est un accumulateur d'énergie (12), en particulier un accumulateur tournant ou une batterie ou un condensateur, en particulier un condensateur à double couche.

3. Dispositif selon la revendication 1 ou 2, **caractérisé en ce que** l'empilement de piles à combustible (10) peut être commuté par le dispositif de commutation (40) en parallèle avec l'élément de commande d'énergie (14) permettant d'effectuer une charge de l'accumulateur d'énergie (12).

4. Dispositif selon l'une des revendications précédentes, **caractérisé en ce que** l'unité d'énergie (12) est un empilement de piles à combustible.

5. Dispositif selon l'une des revendications précédentes, **caractérisé en ce qu'**au moins un deuxième convertisseur continu-continu (50), couplé à un deuxième accumulateur d'énergie (42), est monté en parallèle du dipôle (11).

6. Dispositif selon l'une des revendications précédentes, **caractérisé en ce que** l'élément de commande d'énergie (14) est monté en série avec l'empilement de piles à combustible (10) comme première unité d'énergie (10), un empilement de piles à combustible (12) étant disposé comme deuxième unité d'énergie (12).
